# EUROPEAN PATENT SPECIFICATION

(11) **EP 2 290 989 B1**
(45) Date of publication and mention of the grant of the patent: **28.01.2015**
(21) Application number: 10179562.3
(22) Date of filing: 27.05.2003
(51) Int. Cl.: H04N 19/593

(54) **Method and systems for image intra-prediction mode estimation, communication, and organization**
Verfahren und Systeme zur Bildintraprädiktions-modusschätzung, Kommunikation und Organisation
Procédés et systèmes pour l'estimation, la communication et l'organisation de modes d'intra-prédiction d'images

(30) Priority: 28.05.2002 US 319272 P; 11.07.2002 US 319390 P; 31.03.2003 US 404211; 31.03.2003 US 404293; 31.03.2003 US 404298
(43) Date of publication of application: 02.03.2011
(62) Divisional of application: 08007745.6
(73) Proprietor: Sharp Kabushiki Kaisha, Osaka-shi, Osaka 545-8522 (JP)
(72) Inventor: Sun, Shijun, Redmond, WA 98052 (US); Kerofsky, Louis Joseph, Camas, WA 98607 (US)
(74) Representative: Treeby, Philip David William

(56) References cited:
- WO-A-00/33583
- WO-A-02/054779
- US-A1- 2003 081 838
- KARCZEWICZ: "Analysis and Simplification of Intra Prediction", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. JVT-D025, 26 July 2002 (2002-07-26), XP030005299,
- SUN: "Intra Prediction Mode Ordering and Coding", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. JVT-D027, 26 July 2002 (2002-07-26), XP030005301,
- "H.26L TEST MODEL LONG TERM NUMBER 6 (TML-6) DRAFT 0", ITU-T TELECOMMUNICATION STANDARIZATION SECTOR OF ITU, GENEVA, CH, 9 January 2001 (2001-01-09), pages 1-35, XP001089815,
- BOJUN MENG ET AL: "Fast intra-prediction mode selection for 4x4 blocks in H.264", 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 6 April 2003 (2003-04-06), pages III389-III392, XP010639091, ISBN: 0-7803-7663-3
- PATENT ABSTRACTS OF JAPAN vol. 2000, no. 13, 5 February 2001 (2001-02-05) & JP 2000, 295627, A, (MATSUSHITA ELECTRIC IND CO LTD), 20 October 2000 (2000-10-20)

## Description

### BACKGROUND

Embodiments of the present invention relate to intra-prediction for an image.

Digital video requires a large amount of data to represent each and every frame of a digital video sequence (e.g., series of frames) in an uncompressed manner. It is not feasible for most applications to transmit uncompressed digital video across computer networks because of bandwidth limitations. In addition, uncompressed digital video requires a large amount of storage space. The digital video is normally encoded in some manner to reduce the storage requirements and reduce the bandwidth requirements.

One technique for encoding digital video is interframe encoding. Interframe encoding exploits the fact that different frames of video typically include regions of pixels, normally selected as x by x blocks, that remain substantially the same. During the encoding process a motion vector interrelates the movement of a block of pixels in one frame to a block of similar pixels in another frame. Accordingly, the system is not required to encode the block of pixels twice, but rather encodes the block of pixels once and provides a motion vector to predict the other block of pixels.

Another technique for encoding digital video is intraframe encoding. Intraframe encoding encodes a frame or a portion thereof without reference to pixels in other frames. Typically intraframe encoding encodes the frame, or portions thereof, on a block by block basis. For example, in MEPG-2 the intraframe encoding makes use of discrete cosine transforms of a block of pixels and subsequent encoding of the transformed coefficients. Other intraframe encoding techniques exist, such as for example, wavelet encoding.

In general, these techniques employ relatively large data tables for referencing prediction modes. Memory for these data tables can be burdensomely expensive for many low cost machines. Moreover, it is also burdensomely expensive to provide sufficient memory within processing devices to store the data table. Also, the resulting system has increased complexity with the large data table.

Karczewicz, M. et al: "Analysis and Simplification of Intra Prediction", JVT (ISO/IEC JCTC1/SC29/WG11 and ITU-T SG16 Q.6), JVT-D025, discloses intra prediction in the context of the JVT standard. The intra prediction modes are ordered as follows:
Mode 0: Vertical prediction
Mode 1: Horizontal prediction
Mode 2: DC prediction
Mode 3: Diagonal Down/Left prediction
Mode 4: Diagonal Down/Right prediction
Mode 5: Vertical Left prediction
Mode 6: Horizontal Down prediction
Mode 7: Vertical Right prediction
Mode 8: Horizontal Up prediction

An estimated prediction mode for a block C is chosen as the minimum of the modes used for the adjacent blocks A and B. If the estimated prediction mode is used, the encoder sends one bit value. It the estimated prediction mode is not used, a code number from 0 to 7 is sent to indicate which of the remaining 8 modes should be used.

The document Sun, S. et al: "Intra-Prediction-Mode Ordering and Coding", JVT (ISO/IEC JCTC1/SC29/WG11 and ITU-T SG16 Q.6), JVT-D027, discloses the following mode ordering:
Mode 0: Horizontal prediction
Mode 1: Vertical prediction
Mode 2: DC prediction
Mode 3: Diagonal Down/Left prediction
Mode 4: Horizontal Down prediction
Mode 5: Diagonal Down/Right prediction
Mode 6: Vertical Right prediction
Mode 7: Vertical Left prediction
Mode 8: Horizontal Up prediction

The invention provides an improvement over that disclosed in each of the above identified documents. The invention provides an image decoding system as defined in claim 1, and an image decoding method as defined in claim 2.

### BRIEF DESCRIPTION OF THE DRAWINGS

The following drawings depict only typical embodiments of the present invention and are not therefore to be considered to be limiting of its scope, the invention will be described and explained with additional specificity and detail through the use of the accompanying drawings in which:
FIG. 1 illustrates some forms of block adjacency;
FIG. 2 illustrates a block of pixels and the adjacent pixels for prediction;
FIG. 3 illustrates general prediction mode directions;
FIG. 4 illustrates the general directions of prediction modes of a comparative example;
FIG. 5 illustrates the general directions of prediction modes of a comparative example;
FIG. 6 illustrates the general directions of prediction modes in an embodiment of the present invention;
FIG. 7 illustrates the general directions of prediction modes of a comparative example;
FIG. 8 illustrates the general directions of prediction modes of a comparative example;
FIG. 9 is a block diagram illustrating mode estimation in some embodiments of the present invention;
FIG. 10 is a block diagram illustrating mode estimation in embodiments with an ordered set of prediction modes;
FIG. 11 is a block diagram illustrating mode estimation with ordered sets associated with numerical values;
FIG 12 is a block diagram illustrating mode estimation options when some adjacent block data is unavailable;
FIG. 13 is a block diagram illustrating mode order modification in some embodiments of the present invention;
FIG. 14 is a block diagram illustrating the methods of an embodiment of the present invention in which an estimated mode is used to modify mode order usage; and
FIG. 15 is a block diagram illustrating the method of an embodiment of the present invention in which an estimate mode is used to modify mode order using specific designators.

### DETAILED DESCRIPTION

Embodiments of the present invention comprise methods and systems related to intra-prediction of images. As all embodiments are related to intra-prediction, the terms "intra-prediction" and "prediction" may be used interchangeably to refer to intra-prediction processes.

Embodiments of the present invention use intraframe coding or intracoding to exploit spatial redundancies within a video image. Because adjacent blocks generally have similar attributes, the efficiency of the coding process is improved by referencing the spatial correlation between adjacent blocks. This correlation may be exploited by prediction of a target block based on prediction modes used in adjacent blocks.

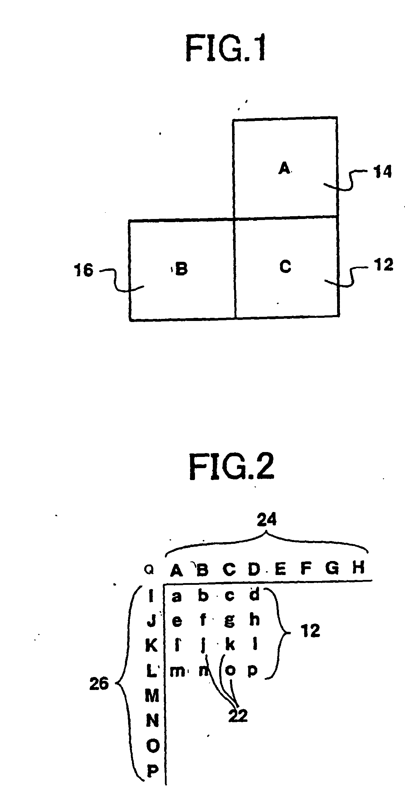

A digital image may be divided into blocks for more efficient processing or for other reasons. As illustrated in Figure 1, a target block "C" 12 may be situated adjacent to adjacent block "A" 14 which is located immediately above target block "C" 12. Another adjacent block "B" 16 is located immediately to the left of target block "C" 12. Other blocks that share boundaries with target block "C" 12 may also be considered to be adjacent blocks to block "C" 12.

Blocks may comprise various numbers of pixels in different configurations. For example, a block may comprise a 4x4 array of pixels. A block may also comprise a 16x16 array of pixels or an 8x8 array. Other pixel configurations, including both square and rectangular arrays may also make up a block.

Each pixel in a target block may be predicted with reference to data regarding pixels in adjacent blocks. This adjacent pixel data or adjacent block data comprises the prediction modes used to predict those adjacent blocks or adjacent pixels. Specific adjacent pixels and pixels within a target block may be referenced using an alphanumeric index as illustrated in Figure 2. Figure 2 illustrates a 4x4 target block, such as block "C" 12 comprising 16 pixels designated by lower case alphabetic characters 22. Pixels in an adjacent block immediately above the target block are designated by capital alphabetic characters 24. Pixels in an adjacent block immediately to the left of the target block are designated by capital alphabetical characters 26.

Prediction modes may comprise instructions or algorithms for predicting specific pixels in a target block. These modes may refer to one or more adjacent block pixels as described in the following mode descriptions.

### Prediction Modes

### Mode 0: vertical prediction

a, e, i, m may be predicted by A
b, f, j, n, may be predicted by B,
c, g, k, o, may be predicted by C
d, j, l, p may be predicted by D

### Mode 1: horizontal prediction

a, b, c, d, may be predicted by I
e, f, g, h, may be predicted by J
i, j, k, l, may be predicted by K
m, n, o, p, may be predicted by L

### Mode 2: DC prediction

If all samples A, B, C, D, I, J, K, L, are available, all samples may be predicted by (A+B+C+D+I+J+K+L+4)>>3. If A, B, C, and D are not available and I, J, K, and L are available, all samples may be predicted by (I+J+K+L+2)>>2. If I, J, K, and L are not available and A, B, C, and D are available, all samples may be predicted by (A+B+C+D+2)>>2. If all eight samples are not available, the prediction for all luma samples in the block may be 128. A block may be always predicted in this mode.

### Mode 3: diagonal down/left prediction

| | |
|---|---|
| a may be predicted by | (A+2B+C+1+2J+K+4)>>3 |
| b, e may be predicted by | (B+2C+D+J+2K+L+4)>>3 |
| c, f, i may be predicted by | (C+2D+E+K+2L+M+4)>>3 |
| d, g, j, m may be predicted by | (D+2E+F+L+2M+N+4)>>3 |
| h, k, n may be predicted by | (E+2F+G+M+2N+O+4)>>3 |
| l, o may be predicted by | (F+2G+H+N+2O+P+4)>>3 |
| p may be predicted by | (G+H+O+P+2)>>2 |

### Mode 4: diagonal down/right prediction

| | |
|---|---|
| m may be predicted by | (J+2K+L+2)>>2 |
| i, n may be predicted by | (I+2J+K+2)>>2 |
| e, j, o may be predicted by | (Q+2I+J+2)>>2 |
| a, f, k, p may be predicted by | (A+2Q+I+2)>>2 |
| b, g, l may be predicted by | (Q+2A+B+2)>>2 |
| c, h may be predicted by | (A+2B+C+2)>>2 |
| d may be predicted by | (B+2C+D+2)>>2 |

### Mode 5: vertical-left prediction

| | |
|---|---|
| a, j may be predicted by | (Q+A+1)>>1 |
| b, k may be predicted by | (A+B+1)>>1 |
| c, I may be predicted by | (B+C+1)>>1 |
| d may be predicted by | (C+D+1)>>1 |
| e, n may be predicted by | (I+2Q+A+2)>>2 |
| f, o may be predicted by | (Q+2A+B+2)>>2 |
| g, p may be predicted by | (A+2B+C+2)>>2 |
| h may be predicted by | (B+2C+D+2)>>2 |
| i may be predicted by | (Q+2I+J+2)>>2 |
| m may be predicted by | (I+2J+K+2)>>2 |

### Mode 6: horizontal-down prediction

| | |
|---|---|
| a, g may be predicted by | (Q+I+1)>>1 |
| b, h may be predicted by | (I+2Q+A+2)>>2 |
| c may be predicted by | (Q+2A+B+2)>>2 |
| d may be predicted by | (A+2B+C+2)>>2 |
| e, k may be predicted by | (I+J+1)>>1 |
| f, may be predicted by | (Q+2I+J+2)>>2 |
| i, o may be predicted by | (J+K+1)>>1 |
| j, p may be predicted by | (I+2J+K+2)>>2 |
| m may be predicted by | (K+L+1)>>1 |
| n may be predicted by | (J+2K+L+2)>>2 |

### Mode 7: vertical-right prediction

| | |
|---|---|
| a may be predicted by | (2A+2B+J+2K+L+4)>>3 |
| b, i may be predicted by | (B+C+1)>>1 |
| c, j may be predicted by | (C+D+1)>>1 |
| d, k may be predicted by | (D+E+1)>>1 |
| I may be predicted by | (E+F+1)>>1 |
| e may be predicted by | (A+2B+C+K+2L+M+4)>>3 |
| f, m may be predicted by | (B+2C+D+2)>>2 |
| g, n may be predicted by | (C+2D+E+2)>>2 |
| h, o may be predicted by | (D+2E+F+2)>>2 |
| p may be predicted by | (E+2F+G+2)>>2 |

### Mode 8: horizontal-up prediction

| | |
|---|---|
| a may be predicted by | (B+2C+D+2I+2J+4)>>3 |
| b may be predicted by | (C+2D+E+I+2J+K+4)>>3 |
| c, e may be predicted by | (J+K+1)>>1 |
| d, f may be predicted by | (J+2K+L+2)>>2 |
| g, i may be predicted by | (K+L+1)>>1 |
| h, j may be predicted by | (K+2L+M+2)>>2 |
| l, n may be predicted by | (L+2M+N+2)>>2 |
| k, m may be predicted by | (L+M+1)>>1 |
| o may be predicted by | (M+N+1)>>1 |
| p may be predicted by | (M+2N+O+2)>>2 |

The ordering process, which is based upon the likelihood of producing a lesser prediction error for each of the modes, increases the coding efficiently, reduces the memory requirements, and may be at least partially mathematically defined.

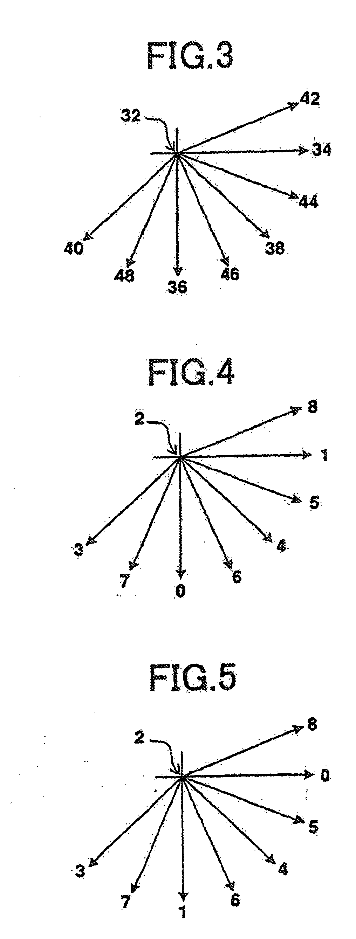

Each prediction mode may be described by a general direction of prediction as described verbally in each of the mode titles above (i.e., horizontal up, vertical and diagonal down left). A prediction mode may also be described graphically by an angular direction. This angular direction may be expressed through a diagram with arrows radiating outward from a center point as shown in Figure 3. In this type of diagram, each arrow and the center point may represent a prediction mode. The angle corresponding to a prediction mode has a general relationship to the direction from the weighted average location of the adjacent pixels used to predict the target pixel to the actual target pixel location. However, the modes are more precisely defined in the definitions above and in the JVT standard. In Figure 3, the center point 32 represents no direction so this point may be associated with a DC prediction mode. A horizontal arrow 34 may represent a horizontal prediction mode. A vertical arrow 36 may represent a vertical prediction mode. An arrow extending from the center point diagonally downward to the right at approximately a 45 degree angle from horizontal 38 may represent a Diagonal Down/Right (DDR) prediction mode. An arrow extending from the center point diagonally downward to the left at approximately a 45 degree angle from horizontal 40 may represent a Diagonal Down/Left (DDL) prediction mode. Both the DDR and DDL prediction modes may be referred to as diagonal prediction modes.

An arrow extending from the center point diagonally upward to the right at approximately a 22.5 degree angle from horizontal 42 may represent a Horizontal Up (HU) prediction mode. An arrow extending from the center point diagonally downward to the right at approximately a 22.5 degree angle from horizontal 44 may represent a Horizontal Down (HD) prediction mode. An arrow extending from the center point diagonally downward to the right at approximately a 67.5 degree angle from horizontal 46 may represent a Vertical Right (VR) prediction mode. An arrow extending from the center point diagonally downward to the left at approximately a 67.5 degree angle from horizontal 48 may represent a Vertical Left (VL) prediction mode. The HU, HD, VR and VL prediction modes may be referred to collectively as intermediate angle prediction modes.

Many other prediction modes may be created and described using this angular description scheme.

### Prediction Mode Order

The present inventors have determined that prediction modes may be ordered in a manner generally consistent with their likelihood of producing a reduced prediction error. With the prediction modes ordered according to their general likelihood of producing a lesser prediction error, the resulting data itself may have a greater tendency to be more consistently ordered. Furthermore, communication of modes may take advantage of coding techniques that reduce memory and bandwidth requirements. For example, the present inventors determined that the horizontal prediction mode and the vertical prediction mode are generally more likely than diagonal prediction modes, which are generally more likely than intermediate angle prediction modes. In addition, a DC prediction mode (e.g., when an adjacent block is coded in inter mode) is generally less likely than horizontal and vertical prediction modes and generally more likely than diagonal prediction modes.

For blocks that do not border discontinuities such as image edges or swipe/swath boundaries, the order established in some embodiments of the present invention may be expressed, in general terms, as follows: vertical and horizontal prediction modes are more likely to produce a reduced prediction error than a DC prediction mode and that a DC prediction mode is more likely to produce a reduced prediction error than diagonal prediction modes and that diagonal prediction modes are more likely to produce a reduced prediction error than intermediate angle prediction modes.

For blocks near edges or boundaries or where adjacent block or pixel prediction mode data is not available, the order established in some embodiments of the present invention may be expressed, in general terms, as follows: DC prediction mode is more likely to produce a reduced prediction error than vertical and horizontal prediction modes and vertical and horizontal prediction modes are more likely to produce a reduced prediction error than diagonal prediction modes and that diagonal prediction modes are more likely to produce a reduced prediction error than intermediate angle prediction modes.

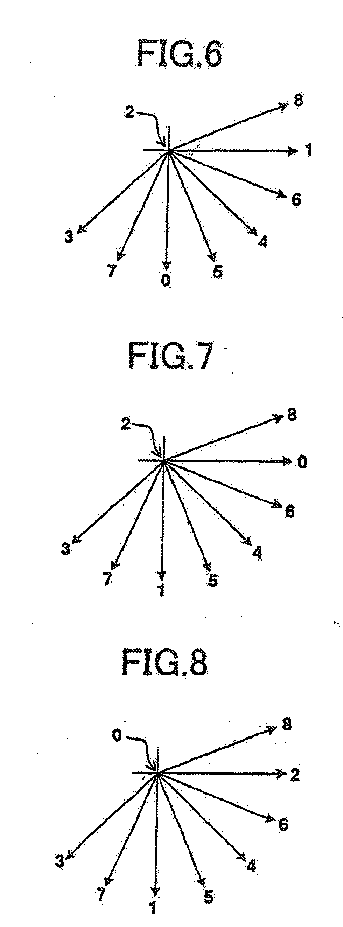

In an embodiment, as illustrate in Figure 6, modes may be defined in order as follows:
Mode 0: Vertical prediction
Mode 1: Horizontal prediction
Mode 2: DC prediction
Mode 3: Diagonal Down/Left prediction
Mode 4: Diagonal Down/Right prediction
Mode 5: Vertical Right prediction
Mode 6: Horizontal Down prediction
Mode 7: Vertical Left prediction
Mode 8: Horizontal Up prediction

Some embodiments of the present invention may comprise one or more data tables for organization of mode data. With the modes being generally arranged in an ordered manner, this may be used together with each cell in a data table, to provide a more ordered set. For example, each entry in the data table may include the ordered set of numbers 0, 1, 2, 3, 4, 5, 6, 7, 8, and 9. Alternatively, the ordered set of numbers in the data table may include 5, 6, 7, 8, or 9 sets of ordered numbers for each entry in the data table. For example, the data table entries may include the following sets of data entries {1,2, 3, 5, 7}; {0, 1, 2, 3, 4, 5, 6}; {0, 1, 3, 5, 6, 7, 8}, where each of the numbers in the set are of increasing numerical value. Alternatively for example, the data table entries may include the following sets of data entries {1, 2, 3, 5, 7}; {0,1, 2, 3, 4, 5, 6}; {0,1, 3, 5, 6, 7, 8}, where each set is included in at least 25%, or 35%, or 50%, or 75%, or 90%, or more, of the cells. In this manner, the table will have significantly more predictability than known data table methods, which decreases memory requirements.

The predetermined manner of the ordering of the sets of data entries should be independent of the prediction modes of adjoining sets of pixels (e.g. macroblocks). It is to be understood that the data table may be "static" in nature or may be effectively dynamically generated, in whole or in part, when needed based upon patterns in the data. Accordingly, a mathematical equation or an algorithm may be used to determine the entries, which in this case the "table" could be created by such a technique. Accordingly, a "data table" as used herein is not merely restricted to a static table, but further includes such a set of values, however determined, that are used for such prediction.

Unfortunately, the substitution of the previous mode numbers with the new mode numbers (e.g., a substitution of numbers into the cells of known data tables), while perhaps an improvement, still results in a generally unordered set of data.

### Estimating a Pixel Prediction Mode Based on Adjacent Block Data

In contrast to the generally unordered set of data shown, even with substitutions, the present inventors came to the further realization that the most likely prediction mode should be ordered first, the second most likely prediction mode ordered second, if desired, followed by the remaining modes in a predetermined manner. The predetermined manner should be independent of the prediction modes of adjoining macroblocks. The preferred order of the remaining modes should be in a decreasing likelihood of occurrence of the remaining modes (most likely prediction mode, and if desired, second most likely prediction mode).

Based on the intra prediction modes of block A and block B, as shown in Figure 1, the intra prediction mode order for block C may be defined as follows:
(1) If both block A and block B are "outside" (e.g., not available), only DC prediction (mode 2) is permitted, therefore the intra prediction mode order for-block C is {2}.
(2) If block A is "outside" (e.g., not available) and block B is not "outside", only DC prediction (mode 2) and horizontal prediction (mode 0) are permitted for block C, therefore;
   (i) if block B is 2, intra prediction mode order for block C is {2, 0};
   (ii) otherwise, intra prediction mode order for block C is {0, 2}.
(3) If block A is not "outside" but block B is "outside", only DC prediction (mode 2) and vertical prediction (mode 1) are permitted for block C, therefore
   (i) if block A is 2, intra prediction mode order for block C is {2, 1};
   (ii) otherwise, intra prediction mode order for block C is {1, 2}.
(4) If neither block A nor block B is "outside",
   (i) if the prediction mode of block A is less than the prediction mode of block B, then intra prediction mode order for block C is {intra prediction block mode A, intra prediction block mode B, other modes in ascending order};
   (ii) if the prediction mode of block A is greater than the prediction mode of block B, then intra prediction mode order for block C is {intra prediction block mode B, intra prediction block mode A, other modes in ascending order};
   (iii) if the prediction mode of block A equals the prediction mode of block B, then intra prediction mode order for block C is {intra prediction block mode A, other modes in ascending order}.

For example, if the prediction mode of block A is 3 and the prediction mode of block B is 1, then intra prediction mode order for block C is {1, 3, 0, 2, 4, 5, 6,-7, 8}. With the modes arranged in a generally decreasing likelihood (or increasing) of occurrence, then the automatic arrangement of the remaining modes of occurrence will still be generally arranged in the proper sequence. The ordering of the sequence from higher to lower probability increases the likelihood of the proper prediction toward the front. With entropy encoding this decreases the resulting encoded bit stream. Other arrangements may likewise be used.

Conceptually the aforementioned selection scheme is based upon the principle that if the prediction of block A is X and the prediction of block B is Y, then it is likely the prediction of block C is X or Y. The prediction for X and/or Y is located at the start of the list and the remaining modes are sequentially listed thereafter.

Stated another way, when the prediction modes of A and B are known (including the case that A or B or both are outside the slice) the most probable mode of C is given, namely, the minimum of the modes used for blocks A and B. If one of the blocks A or B is "outside" the most probable mode is equal to prediction mode 2. The ordering of prediction modes assigned to blocks C is therefore the most probable mode followed by the remaining modes in the ascending order.

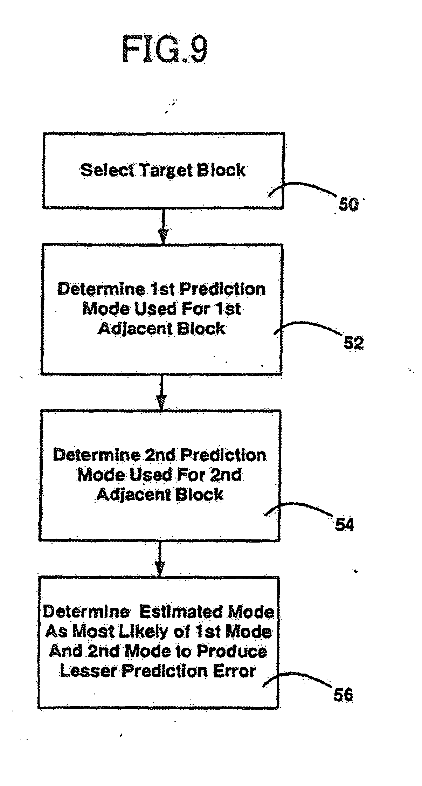

Embodiments of the present invention may be described with reference to Figure 9. In these embodiments, a target block is selected 50 for prediction. A prediction mode used for prediction of a first adjacent block, which is immediately adjacent to said target block, is then determined 52. A prediction mode used for prediction of a second adjacent block, which is also adjacent to said target block is also determined 54. These adjacent block prediction modes are then examined 56 to determine which is more likely to produce a lesser prediction error.

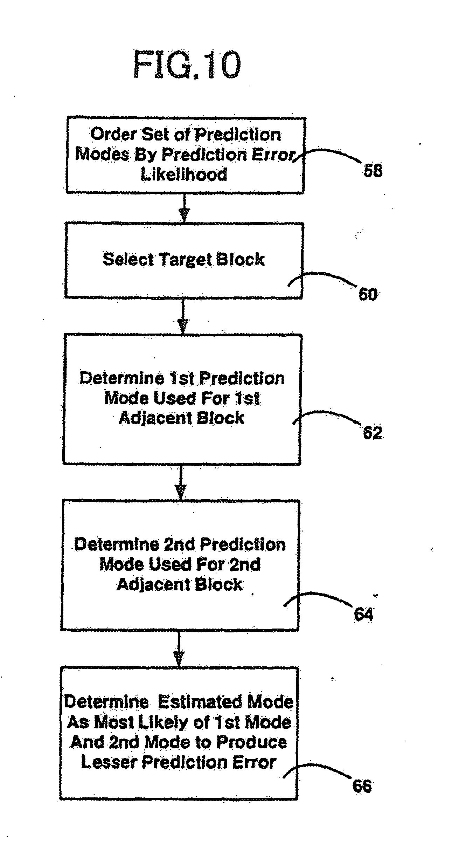

In other embodiments of the present invention, as illustrated in Figure 10, a set of prediction modes is ordered 58 according to the modes' likelihood of producing a lesser prediction error. A target block is selected 60. The prediction mode used for a first adjacent block is determined 62 and the prediction mode used for a second adjacent block is also determined 64. These two prediction modes are then examined 66 to determine which occurs first in the ordered set of modes thereby corresponding to the mode with the higher likelihood of producing a lesser prediction error.

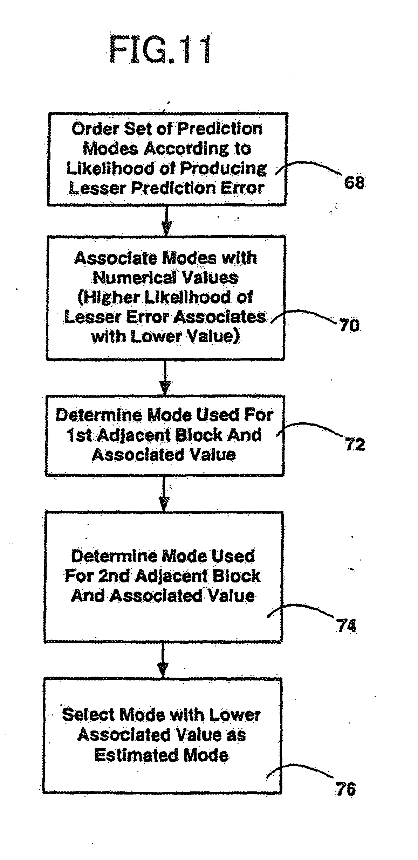

In further embodiments of the present invention, as illustrated in Figure 11, a set of prediction modes is ordered 68 by likelihood of producing a lesser prediction error. These modes in the ordered set are then associated 70 with numerical values such that modes with a higher likelihood of producing a lesser prediction error are associated with lower numerical values. The mode used to predict a first adjacent block is then determined 72 and the mode used to predict a second adjacent block is also determined 74. These adjacent block modes are then examined to determine which mode is associated with a lower numerical value. This mode is designated as the estimated mode for prediction of the target block.

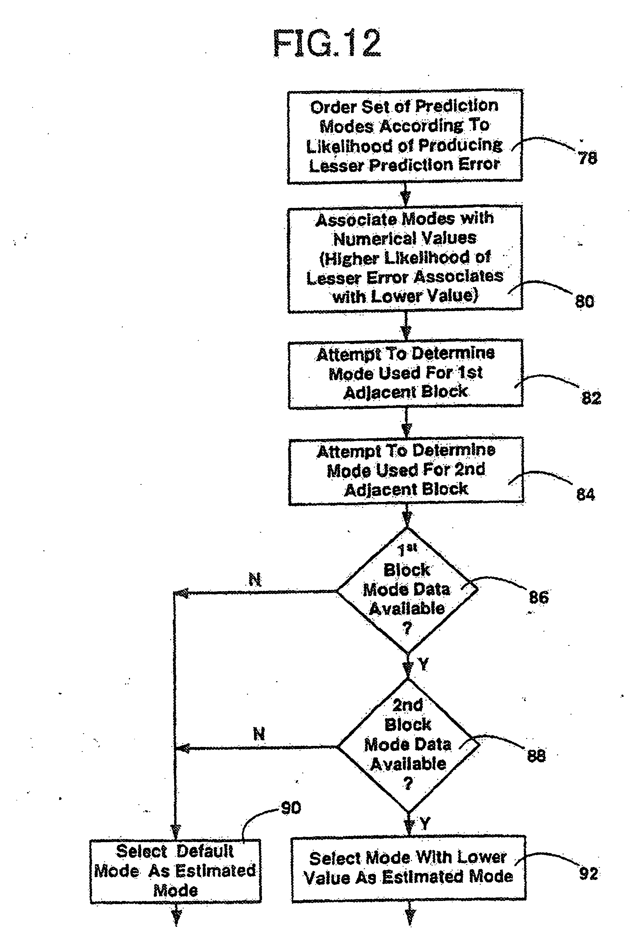

In still further embodiments, as illustrated in Figure 12, a set of prediction modes is ordered 78 by likelihood of producing a lesser prediction error. These modes in the ordered set are then associated 80 with numerical values such that modes with a higher likelihood of producing a lesser prediction error are associated with lower numerical values. An attempt 82 is made to determine the mode used to predict a first adjacent block and an attempt 84 is made to determine the mode used to predict a second adjacent block. If the prediction mode used to predict the first adjacent block is not available 86, a default prediction mode, such as a DC prediction mode, may be designated 90 as an estimated prediction mode for the target block. Also, if the prediction mode used to predict the second adjacent block is not available 88, a default prediction mode, such as a DC prediction mode, may be designated 90 as an estimated prediction mode for the target block. When the adjacent block prediction modes are available, these adjacent block modes may be examined to determine which mode is associated with a lower numerical value. This mode is then designated 92 as the estimated mode for prediction of the target block.

### Modification of Prediction Mode Order Based on Adjacent Block Data

In some embodiments of the present invention the prediction mode orders described above, which have been determined independently of the adjacent block data, may be modified with adjacent block data. Prediction mode estimates determined with reference to adjacent block data can be inserted into prediction mode orders to modify the orders to reflect the additional information obtained from adjacent block data.

In some of these embodiments, a prediction mode estimate, based on adjacent block data, can be inserted directly into a prediction mode order set. Typically, the prediction mode estimate will be inserted or prepended at the front of the prediction mode order at the position of the mode most likely to produce a reduced prediction error. However, in some embodiments the estimate may be inserted at different positions in the mode order.

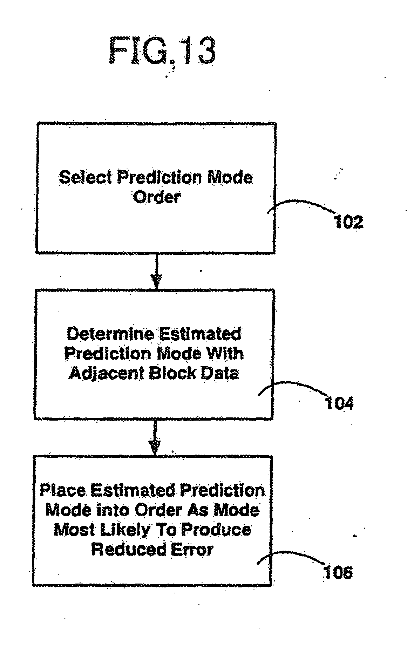

In some embodiments of the present invention, as shown in Figure 13, a prediction mode order is selected 102 wherein the prediction mode order elements may be arranged according to their likelihood of producing a lesser prediction error. In other words, the first element in the order represents the prediction mode most likely to yield a lesser prediction error, the next element in the order represents the prediction mode that is the next most likely to yield a lesser prediction error and so on to the last element in the order, which represents the prediction mode in the order that is least likely to yield a lesser prediction error.

A prediction mode estimate is also determined 104, as described above. This estimate is determined using adjacent block data. Generally, the estimate is the prediction mode used in one or more adjacent blocks that is likely to yield a lesser prediction error. However, the estimate may be determined in other ways. When sufficient adjacent block prediction mode data is not available, such as at an image edge or a slice boundary, a prediction mode for the target block may be estimated based on the lack of one or more adjacent blocks or their prediction mode data. In many cases, a DC prediction mode will be estimated when adjacent block data is limited or unavailable.

In some embodiments, once the estimated prediction mode is estimated, the estimated prediction mode may be placed 106 into the mode order as the mode most likely to yield a lesser prediction error. In some embodiments, this will be the first mode in the order or the mode associated with the lowest numerical value.

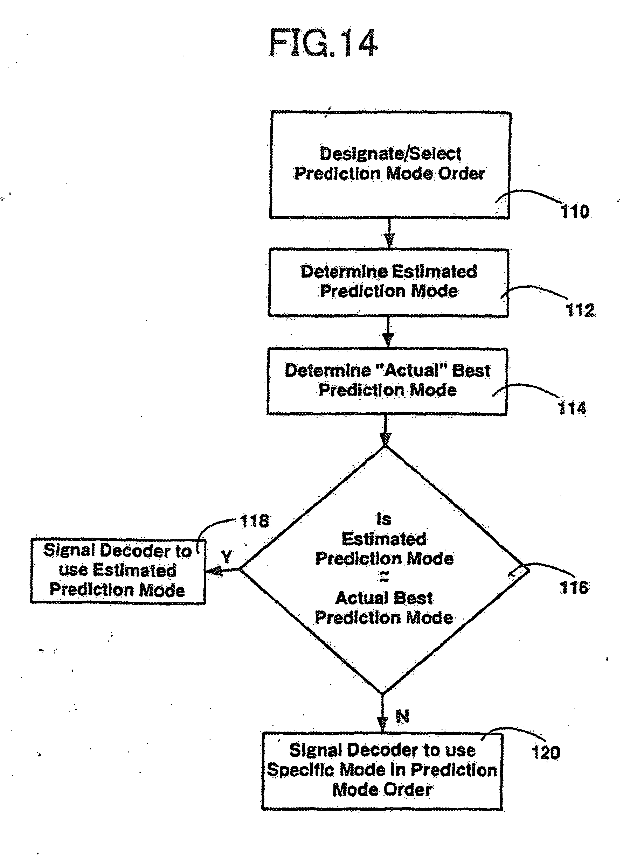

In other embodiments, the estimated prediction mode may take precedence over the pre-selected mode order. In some of these embodiments, as illustrated in Figure 14, a pre-selected mode order is designated 110 at the encoder and the decoder. This order comprises a set of prediction modes arranged in order of likelihood of yielding a lesser prediction error or some other order. An estimated prediction mode is also determined 112 based on adjacent block data. This estimated prediction mode is determined at the encoder and the decoder according to the same algorithm or method. The encoder also determines the actual best prediction mode 114 for predicting a pixel based on motion vectors or other known techniques. The encoder may, then, compare 116 the actual best prediction mode to the estimated prediction mode to determine whether they are the same. If the estimated prediction mode is the same mode as the actual best prediction mode, the encoder may signal to the decoder that the estimated prediction mode is to be used 118. In some embodiments, this estimated prediction mode signal may be performed with a 1-bit flag to signify whether the estimated mode is to be used on not.

If the estimated prediction mode is not the actual best prediction mode, the encoder may signal to the decoder that another mode may be used 120. This may be performed by reference to the pre-established mode order. The encoder may determine which mode in the mode order is most equivalent to the actual best prediction mode and signal the decoder to use that mode.

When an ordered set of prediction modes is used, the set order may be rearranged once further data is obtained. For example, an ordered set of prediction modes may be reordered when an estimated prediction mode is determined or when a best actual prediction mode is determined. In these cases, the modifying mode may be interjected into the ordered set, placed ahead of the ordered set or, in some cases, removed from the ordered set.

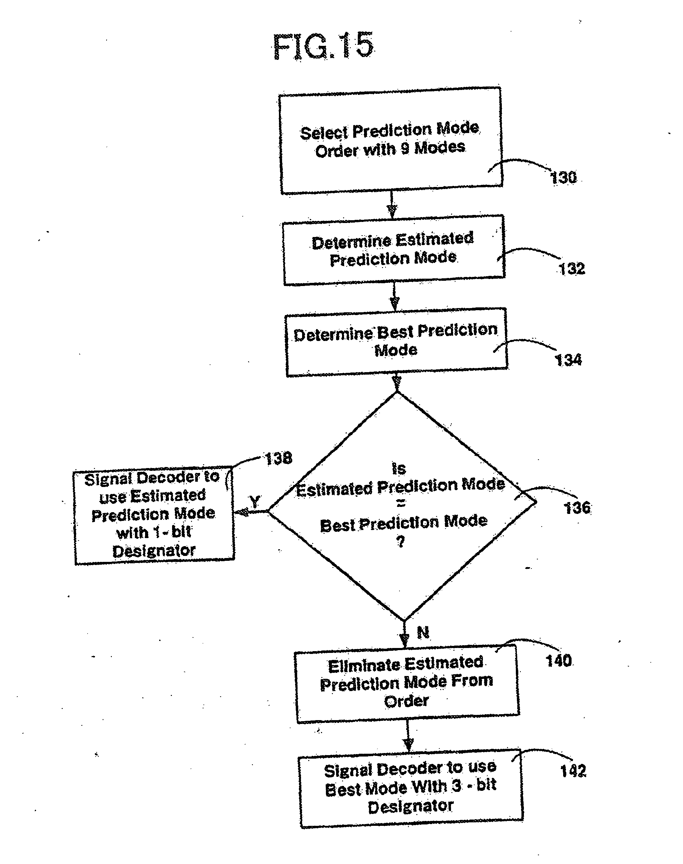

In some embodiments of the present invention, each mode in the mode order may be associated with a numerical value according to the order. In these embodiments, the numerical value associated with the mode to be used may be sent to the decoder to signal the decoder to use that prediction mode. In some of these embodiments, as illustrated in Figure 15, a mode order comprising 9 prediction modes may be selected 130. An estimated prediction mode based on adjacent block data, and which is one of the 9 modes in the order, may also be determined 132. A best prediction mode may also be determined 134 by motion vector methods or other methods. The best prediction mode may then be compared to the estimated prediction mode 136. If the estimated prediction mode is substantially the same as the best prediction mode, the decoder may be signaled with a 1-bit designator to use the estimated prediction mode, which is already identified at the decoder. If the estimated prediction mode is not equivalent to the best prediction mode, the estimated prediction mode is essentially eliminated from the mode order 140. This elimination may be performed by re-ordering the set, skipping the estimated mode in the order or by other means. The remaining order will effectively comprise 8 modes, which can be represented by a 3-bit designator. This 3-bit designator may be sent to the decoder 142 to designate which mode to use for prediction.

The terms and expressions employed in the foregoing specification are used therein as terms of description and not of limitation, and there is no intention in the use of such terms and expressions of excluding equivalents of the features shown and described or portions thereof, it being recognized that the scope of the invention is defined and limited only by the claims that follow.

## Claims

1. An image decoding system for decoding a digital image comprising:
means for decoding each of blocks into which an image is divided;
intra-prediction means for predicting a pixel value of a target block to be decoded by using a pixel value of an adjacent block; and
prediction mode estimating means for estimating a prediction mode for the target block; wherein
the infra-prediction means includes a vertical prediction mode using a prediction value being a pixel value of a first block located adjacent to and above the target block; a horizontal prediction mode using a prediction value being a pixel value of a second block located adjacent to the left side of the target block; a DC prediction mode using a prediction value being an average of the pixel values of the first and second blocks; a diagonal down/left prediction mode using the specified direction being diagonally downward to the left at a 45 degree angle from the horizontal; a diagonal down/right prediction mode using the specified direction being diagonally downward to the right at a 45 degree angle from the horizontal; a vertical right prediction mode using the predicting direction being specified by one pixel rightward and two pixels downward; a horizontal down prediction mode using the predicting direction being specified by two pixels rightward and one pixel downward; a vertical left prediction mode using the predicting direction being specified by one pixel leftward and two pixels downward, a horizontal up prediction mode using the predicting direction being specified by two pixels rightward and one pixel upward;
the prediction modes are numbered with increasingly larger numbers, in order of the vertical prediction mode, the horizontal prediction mode, the DC prediction mode, the diagonal down/left prediction mode, the diagonal down/right prediction mode, the vertical right prediction mode, the horizontal down prediction mode, the vertical left prediction mode and the horizontal up prediction mode, and
the prediction mode estimating means determines a prediction mode to have the lower mode number among the prediction mode of the first block and the prediction mode of the second block as the estimated prediction mode for the target block

2. An image decoding method for decoding a digital image by decoding each of blocks into which an image is divided, the method comprising:
an intra-prediction step of predicting a pixel value of a target block to be predicted by using a pixel value of an adjacent block; and
a prediction mode estimating step of estimating a prediction mode for the target block; wherein
the intra-prediction step uses at least a vertical prediction mode using a prediction value being a pixel value of a first block located adjacent to and above the target block; a horizontal prediction mode using a prediction value being a pixel value of a second block located adjacent to the left side of the target block; a DC prediction mode using a prediction value being an average of the pixel values of the first and second blocks; a diagonal down/left prediction mode using the specified direction being diagonally downward to the left at a 45 degree angle from the horizontal; a diagonal down/right prediction mode using the specified direction being diagonally downward to the right at a 45 degree angle from the horizontal; a vertical right prediction mode using the predicting direction being specified by one pixel rightward and two pixels downward; a horizontal down prediction mode using the predicting direction being specified by two pixels rightward and one pixel downward; a vertical left prediction mode using the predicting direction being specified by one pixel leftward and two pixels downward; a horizontal up prediction mode using the predicting direction being specified by two pixels rightward and one pixel upward;
the prediction modes are numbered with increasingly larger numbers, in order of the vertical prediction mode, the horizontal prediction mode, the DC prediction mode, the diagonal down/left prediction mode, the diagonal down/right prediction mode, the vertical right prediction mode, the horizontal down prediction mode, the vertical left prediction mode and the horizontal up prediction mode, and
the prediction mode estimating step determines a prediction mode to have the lower mode number among the prediction mode of the first block and the prediction mode of the second block as the estimated prediction mode for the target block

## Patentansprüche

1. Bilddecodiersystem zum Decodieren eines digitalen Bildes,
mit:
einer Einrichtung zum Decodieren eines jeden von Blöcken, in welche ein Bild unterteilt ist,
einer Intra-Vorhersageeinrichtung zum Vorhersagen eines Pixelwerts eines zu decodierenden Zielblocks unter Verwendung eines Pixelwerts eines benachbarten Blocks und
einer Vorhersagemodusbewertungseinrichtung zum Bewerten eines Vorhersagemodus für den Zielblock,
wobei
die Intra-Vorhersageeinrichtung aufweist einen vertikalen Vorhersagemodus unter Verwendung eines Vorhersagewerts, welcher ein Pixelwert eines ersten Blocks ist, welcher benachbart ist zu und oberhalb des Zielblocks angeordnet ist, einen horizontalen Vorhersagemodus unter Verwendung eines Vorhersagewerts, welcher ein Pixelwert eines zweiten Blocks ist, der benachbart zur linken Seite des Zielblocks angeordnet ist, einen DC-Vorhersagemodus unter Verwendung eines Vorhersagewerts, welcher ein Mittelwert der Pixelwerte der ersten und zweiten Blöcke ist, einen diagonalen Abwärts-/Linksvorhersagemodus unter Verwendung der bestimmten Richtung, welche diagonal abwärts, nach links in einem Winkel von 45 Grad von der Horizontalen verläuft, einen diagonalen Abwärts-/Rechtsvorhersagemodus unter Verwendung der bestimmten Richtung, welche diagonal abwärts, nach rechts in einem Winkel von 45 Grad von der Horizontalen verläuft, einen vertikalen Rechtsvorhersagemodus unter Verwendung der Vorhersagerichtung, welche durch ein Pixel nach rechts und zwei Pixel abwärts bestimmt ist; einen horizontalen Abwärtsvorhersagemodus unter Verwendung der Vorhersagerichtung, welche durch zwei Pixel nach rechts und ein Pixel abwärts bestimmt ist; einen vertikalen Linksvorhersagemodus unter Verwendung der Vorhersagerichtung, welche durch ein Pixel nach links und zwei Pixel abwärts bestimmt ist; einen horizontalen Aufwärtsvorhersagemodus unter Verwendung der Vorhersagerichtung, welche durch zwei Pixel nach rechts und ein Pixel aufwärts bestimmt ist;
die Vorhersagemodi mit ansteigend größeren Zahlen durchnummeriert sind in der Reihenfolge des vertikalen Vorhersagemodus, des horizontalen Vorhersagemodus und des DC-Vorhersagemodus, des diagonalen Abwärts-/ Linksvorhersagemodus, des diagonalen Abwärts-/Rechtsvorhersagemodus, des vertikalen Rechtsvorhersagemodus, des horizontalen Abwärtsvorhersagemodus, des vertikalen Linksvorhersagemodus und des horizontalen Aufwärtsvorhersagemodus,
die Vorhersagemodusbewertungseinrichtung als den bewerteten Vorhersagemodus für den Zielblock einen Vorhersagemodus derart bestimmt, dass er unter dem Vorhersagemodus des ersten Blocks und dem Vorhersagemodus des zweiten Blocks die niedrigere Moduszahl besitzt.

2. Bilddecodierverfahren zum Decodieren eines digitalen Bildes durch Decodieren eines jeden von Blöcken, in welches ein Bild unterteilt ist,
wobei das Verfahren aufweist:
einen Intra-Vorhersageschritt des Vorhersagens eines Pixelwerts eines vorherzusagenden Zielblocks durch Verwenden eines Pixelwerts eines benachbarten Blocks und
einen Vorhersagemodusbewertungsschritt des Bewertens eines Vorhersagemodus für den Zielblock,
wobei
der Intra-Vorhersageschritt zumindest verwendet
einen vertikalen Vorhersagemodus unter Verwendung eines Vorhersagewerts, welcher ein Pixelwert eines ersten Blocks ist, welcher benachbart ist zu und oberhalb des Zielblocks angeordnet ist, einen horizontalen Vorhersagemodus unter Verwendung eines Vorhersagewerts, welcher ein Pixelwert eines zweiten Blocks ist, der benachbart zur linken Seite des Zielblocks angeordnet ist, einen DC-Vorhersagemodus unter Verwendung eines Vorhersagewerts, welcher ein Mittelwert der Pixelwerte der ersten und zweiten Blöcke ist, einen diagonalen Abwärts-/Linksvorhersagemodus unter Verwendung der bestimmten Richtung, welche diagonal abwärts, nach links in einem Winkel von 45 Grad von der Horizontalen verläuft, einen diagonalen Abwärts-/Rechtsvorhersagemodus unter Verwendung der bestimmten Richtung, welche diagonal abwärts, nach rechts in einem Winkel von 45 Grad von der Horizontalen verläuft, einen vertikalen Rechtsvorhersagemodus unter Verwendung der Vorhersagerichtung, welche durch ein Pixel nach rechts und zwei Pixel abwärts bestimmt ist; einen horizontalen Abwärtsvorhersagemodus unter Verwendung der Vorhersagerichtung, welche durch zwei Pixel nach rechts und ein Pixel abwärts bestimmt ist; einen vertikalen Linksvorhersagemodus unter Verwendung der Vorhersagerichtung, welche durch ein Pixel nach links und zwei Pixel abwärts bestimmt ist; einen horizontalen Aufwärtsvorhersagemodus unter Verwendung der Vorhersagerichtung, welche durch zwei Pixel nach rechts und ein Pixel aufwärts bestimmt ist;
die Vorhersagemodi mit ansteigend größeren Zahlen durchnummeriert sind in der Reihenfolge des vertikalen Vorhersagemodus, des horizontalen Vorhersagemodus und des DC-Vorhersagemodus, des diagonalen Abwärts-/ Linksvorhersagemodus, des diagonalen Abwärts-/Rechtsvorhersagemodus, des vertikalen Rechtsvorhersagemodus, des horizontalen Abwärtsvorhersagemodus, des vertikalen Linksvorhersagemodus und des horizontalen Aufwärtsvorhersagemodus,
die Vorhersagemodusbewertungsschritt als den bewerteten Vorhersagemodus für den Zielblock einen Vorhersagemodus derart bestimmt, dass er unter dem Vorhersagemodus des ersten Blocks und dem Vorhersagemodus des zweiten Blocks die niedrigere Moduszahl besitzt.

## Revendications

1. Système de décodage d'image pour décoder une image numérique, comprenant :
des moyens pour décoder chacun des blocs dans lesquels une image est divisée ;
des moyens d'intra-prédiction pour prédire une valeur de pixel d'un bloc cible à décoder à l'aide d'une valeur de pixel d'un bloc adjacent ; et
des moyens d'estimation de mode de prédiction pour estimer un mode de prédiction pour le bloc cible ;
étant précisé
que les moyens d'intra-prédiction comprennent un mode de prédiction verticale utilisant une valeur de prédiction qui est une valeur de pixel d'un premier bloc situé près et au-dessus du bloc cible ; un mode de prédiction horizontale utilisant une valeur de prédiction qui est une valeur de pixel d'un deuxième bloc situé près du côté gauche du bloc cible ; un mode de prédiction DC utilisant une valeur de prédiction qui est une moyenne des valeurs de pixel des premier et deuxième blocs ; un mode de prédiction diagonale bas/gauche utilisant la direction spécifiée en diagonale vers le bas et vers la gauche suivant un angle de 45 degrés par rapport à l'horizontale ; un mode de prédiction diagonale bas/droite utilisant la direction spécifiée en diagonale vers le bas et vers la droite suivant un angle de 45 degrés par rapport à l'horizontale ; un mode de prédiction verticale droite utilisant la direction de prédiction spécifiée par un pixel vers la droite et deux pixels vers le bas ; un mode de prédiction horizontale descendante utilisant la direction de prédiction spécifiée par deux pixels vers la droite et un pixel vers le bas ; un mode de prédiction verticale gauche utilisant la direction de prédiction spécifiée par un pixel vers la gauche et deux pixels vers le bas ; un mode de prédiction horizontale montante utilisant la direction de prédiction spécifiée par deux pixels vers la droite et un pixel vers le haut ;
que les modes de prédiction sont numérotés avec des nombres de plus en plus grands, avec dans l'ordre le mode de prédiction verticale, le mode de prédiction horizontale, le mode de prédiction DC, le mode de prédiction diagonale bas/gauche, le mode de prédiction diagonale bas/droite, le mode de prédiction verticale droite, le mode de prédiction horizontale descendante, le mode de prédiction verticale gauche et le mode de prédiction horizontale montante, et
que les moyens d'estimation de mode de prédiction déterminent un mode de prédiction pour présenter le numéro de mode le plus bas, parmi le mode de prédiction du premier bloc et le mode de prédiction du deuxième bloc, comme mode de prédiction estimé pour le bloc cible.

2. Procédé de décodage d'image pour décoder une image numérique en décodant chacun des blocs dans lesquels une image est divisée, le procédé comprenant :
une étape d'intra-prédiction, qui consiste à prédire une valeur de pixel d'un bloc cible à prévoir, à l'aide d'une valeur de pixel d'un bloc adjacent ; et
une étape d'estimation de mode de prédiction, qui consiste à estimer un mode de prédiction pour le bloc cible ;
étant précisé
que l'étape d'intra-prédiction utilise au moins un mode de prédiction verticale utilisant une valeur de prédiction qui est une valeur de pixel d'un premier bloc situé près et au-dessus du bloc cible ; un mode de prédiction horizontale utilisant une valeur de prédiction qui est une valeur de pixel d'un deuxième bloc situé près du côté gauche du bloc cible ; un mode de prédiction DC utilisant une valeur de prédiction qui est une moyenne des valeurs de pixel des premier et deuxième blocs ; un mode de prédiction diagonale bas/gauche utilisant la direction spécifiée en diagonale vers le bas et vers la gauche suivant un angle de 45 degrés par rapport à l'horizontale ; un mode de prédiction diagonale bas/droite utilisant la direction spécifiée en diagonale vers le bas et vers la droite suivant un angle de 45 degrés par rapport à l'horizontale ; un mode de prédiction verticale droite utilisant la direction de prédiction spécifiée par un pixel vers la droite et deux pixels vers le bas ; un mode de prédiction horizontale descendante utilisant la direction de prédiction spécifiée par deux pixels vers la droite et un pixel vers le bas ; un mode de prédiction verticale gauche utilisant la direction de prédiction spécifiée par un pixel vers la gauche et deux pixels vers le bas ; un mode de prédiction horizontale montante utilisant la direction de prédiction spécifiée par deux pixels vers la droite et un pixel vers le haut ;
que les modes de prédiction sont numérotés avec des nombres de plus en plus grands, avec dans l'ordre le mode de prédiction verticale, le mode de prédiction horizontale, le mode de prédiction DC, le mode de prédiction diagonale bas/gauche, le mode de prédiction diagonale bas/droite, le mode de prédiction verticale droite, le mode de prédiction horizontale descendante, le mode de prédiction verticale gauche et le mode de prédiction horizontale montante, et
que l'étape d'estimation de mode de prédiction détermine un mode de prédiction pour présenter le numéro de mode le plus bas, parmi le mode de prédiction du premier bloc et le mode de prédiction du deuxième bloc, comme mode de prédiction estimé pour le bloc cible.
